# EUROPÄISCHE PATENTANMELDUNG

(11) **EP 3 144 369 A1**
(43) Veröffentlichungstag der Anmeldung: **22.03.2017**
(21) Anmeldenummer: 15185900.6
(22) Anmeldetag: 18.09.2015
(51) Int. Cl.: C10G 45/02, B01D 3/14, C10G 45/32, C10G 69/06, C10G 7/00

(54) **VERFAHREN UND ANLAGE ZUR TRENNTECHNISCHEN BEARBEITUNG EINES KOHLENWASSERSTOFFE UND SCHWEFELVERBINDUNGEN ENTHALTENDEN STOFFGEMISCHS**

(71) Anmelder: Linde Aktiengesellschaft, 80331 München (DE)
(72) Erfinder: FRITZ, Helmut, 81375 München (DE); STIGLMAYR, Ulrike, 85276 Hettenshausen (DE)
(74) Vertreter: m patent group

(57) **Zusammenfassung**

Es wird ein Verfahren (100) zur Bearbeitung eines Stoffgemischs, das überwiegend oder ausschließlich Kohlenwasserstoffe mit M bis N Kohlenstoffatomen enthält, die schwefelhaltige Kohlenwasserstoffe umfassen, wobei unter Verwendung von Fluid des Stoffgemischs ein erster Einsatz gebildet und einer ersten Trennung unterworfen wird, in der eine erste Fraktion gebildet wird, die überwiegend oder ausschließlich Kohlenwasserstoffe mit X bis Y Kohlenstoffatomen und zumindest einen Teil der in dem ersten Einsatz enthaltenen schwefelhaltigen Kohlenwasserstoffe enthält, und unter Verwendung von Fluid der ersten Fraktion ein zweiter Einsatz gebildet und einer Entschwefelung unterworfen wird, in der die in dem zweiten Einsatz enthaltenen schwefelhaltigen Kohlenwasserstoffe überwiegend oder vollständig umgesetzt und Kohlenwasserstoffe mit mehr als Y Kohlenstoffatomen als Nebenprodukte gebildet werden, so dass ein Produktgemisch der Entschwefelung überwiegend oder ausschließlich Kohlenwasserstoffe mit X bis Y Kohlenstoffatomen und die Nebenprodukte enthält, wobei M fünf oder sechs ist, X fünf oder sechs ist, wenn M fünf ist, oder sechs ist, wenn M sechs ist, Y eine ganze Zahl von sechs, sieben oder acht ist und N eine ganze Zahl größer als Y ist, vorgeschlagen. Es ist vorgesehen, dass unter Verwendung von Fluid des Produktgemischs ein dritter Einsatz gebildet und einer zweiten Trennung in einer zweiteiligen Destillationssäule (30) unterworfen wird, in der eine zweite und eine dritte Fraktion gebildet werden, wobei die zweite Fraktion zumindest den überwiegenden Teil der in dem dritten Einsatz enthaltenen Nebenprodukte enthält, und wobei Fluid der dritten Fraktion in der zweiteiligen Destillationssäule in einer dritten Trennung weiter aufgetrennt wird. Eine entsprechende Anlage ist ebenfalls Gegenstand der vorliegenden Erfindung.

## Beschreibung

Die Erfindung betrifft ein Verfahren und eine Anlage zur trenntechnischen Bearbeitung eines Kohlenwasserstoffe enthaltenden Stoffgemischs gemäß den jeweiligen Oberbegriffen der unabhängigen Patentansprüche.

### Stand der Technik

Verfahren und Vorrichtungen zum Dampfspalten (engl. Steam Cracking) von Kohlenwasserstoffen sind bekannt und beispielsweise im Artikel "Ethylene" in Ullmann's Encyclopedia of Industrial Chemistry, online seit 15. April 2007, DOI 10.1002/14356007.a10_045.pub2, beschrieben.

Beim Dampfspalten werden Stoffgemische erhalten, die nach der Abtrennung von Wasser und ölartigen Bestandteilen, falls vorhanden (sogenanntem Pyrolyseöl), noch im Wesentlichen Wasserstoff, Methan und Kohlenwasserstoffe mit mehr als zwei Kohlenstoffatomen enthalten. Derartige Stoffgemische können in unterschiedlichen Trennsequenzen aufgetrennt werden, wie sie dem Fachmann grundsätzlich bekannt und ebenfalls in dem erwähnten Artikel beschrieben sind.

Die vorliegende Erfindung betrifft vornehmlich die trenntechnische Behandlung von sogenanntem Pyrolysebenzin (engl. Pyrolysis Gasoline) oder Teilfraktionen hiervon, wie sie im sogenannten Benzinweg entsprechender Trensequenzen erhalten werden. Wie beispielsweise in dem erwähnten Artikel "Ethylene" in Ullmann's Encyclopedia of Industrial Chemistry angegeben, handelt es sich bei Pyrolysebenzin typischerweise um ein Stoffgemisch, das Kohlenwasserstoffe von fünf bis zehn, je nach Definition auch fünf bis zwölf, Kohlenstoffatomen enthält und dabei reich an aromatischen Verbindungen ist.

Die vorliegende Erfindung kann jedoch auch zur Bearbeitung von vergleichbaren Fraktionen eingesetzt werden, die Kohlenwasserstoffe mit mehr und/oder weniger Kohlenstoffatomen als die angegebene Anzahl aufweisen und/oder die ärmer an aromatischen Verbindungen sind als das klassische Pyrolysebenzin, wie unten im Detail angegeben. Insbesondere stammen derartige Fraktionen jedoch aus einem Stoffgemisch, das mittels eines Verfahrens zum Dampfspalten gewonnen und vergleichbar zu Pyrolysebenzin abgetrennt und behandelt wird.

Die in Pyrolysebenzin enthaltenen nichtaromatischen Verbindungen sind, falls nicht bereits eine entsprechende Hydrierung stattgefunden hat, größtenteils ungesättigt und umfassen einen hohen Anteil an Acetylenen und Dienen. Pyrolysebenzin ist daher instabil und kann nicht über längere Zeit gelagert werden, da die ungesättigten Verbindungen zu Polymerisationsreaktionen neigen. Daher wird herkömmlicherweise zunächst eine sogenannte selektive Hydrierung durchgeführt, bei der die Acetylene und Diene sowie enthaltenes Styrol zumindest größtenteils zu olefinischen Verbindungen umgesetzt werden. Das in einem entsprechenden Schritt, der sogenannten ersten Stufe, bearbeitete Pyrolysebenzin eignet sich grundsätzlich bereits für den Einsatz als Kraftstoff, es weist jedoch noch einen beträchtlichen Anteil an schwefelhaltigen Verbindungen auf. Diese umfassen beispielsweise schwefelhaltige Kohlenwasserstoffe wie Thiophene, Mercaptane und Sulfide und schwerere mit Schwefel substituierte Verbindungen. Diese sind aus Gründen des Emissionsschutzes zu entfernen. Ebenfalls in Kraftstoff unerwünscht sind größere Mengen an aromatischen Verbindungen, insbesondere Benzol. Letztere besitzen zudem einen höheren Marktwert als der Kraftstoff selbst, so dass es wünschenswert ist, die aromatischen Verbindungen als Produkte zu gewinnen.

Nach der selektiven Hydrierung, also der ersten Stufe, erfolgt daher beispielsweise eine Trennung in eine Fraktion aus Kohlenwasserstoffen mit (überwiegend) fünf, eine Fraktion aus Kohlenwasserstoffen mit (überwiegend) sechs bis acht und eine Fraktion aus Kohlenwasserstoffen mit (überwiegend) mehr als neun Kohlenstoffatomen. Die Fraktion aus Kohlenwasserstoffen mit (überwiegend) sechs bis acht Kohlenstoffatomen, auch als Herzschnitt bezeichnet (engl. Heart Cut), wird herkömmlicherweise zunächst einer weiteren katalytischen (Voll-)Hydrierung, der sogenannten zweiten Stufe, unterworfen, bei der Olefine zu Paraffinen und Naphthenen umgesetzt werden. Bei dieser Hydrierung erfolgt herkömmlicherweise auch eine Umsetzung bereits im Pyrolysebenzin enthaltener und in die genannte Fraktion übergegangener schwefelhaltiger Kohlenwasserstoffe, wobei Schwefelwasserstoff gebildet wird. Der Schwefelwasserstoff wird in einem anschließenden Schritt aus der genannten Fraktion ausgetrieben. Die Umsetzung der schwefelhaltigen Kohlenwasserstoffe kann jedoch auch ohne eine gleichzeitige Hydrierung der Olefine erfolgen. Die Umsetzung der schwefelhaltigen Kohlenwasserstoffe wird im Stand der Technik auch als Hydrodesulfurierung (engl. Hydrodesulfurization, HDS) bezeichnet. Wird nachfolgend der Begriff "Entschwefelung" verwendet, kann es sich dabei um ein entsprechendes Verfahren zur ausschließlichen Umsetzung der schwefelhaltigen Kohlenwasserstoffe handeln oder um ein Verfahren, bei dem zusätzlich eine Hydrierung der Olefine erfolgt. Nach der Entschwefelung werden die aromatischen Verbindungen, insbesondere Benzol, Xylole und Toluol (sogenanntes BTX) aus dem Herzschnitt abgetrennt, wobei extraktive Verfahren, insbesondere die Extraktivdestillation, zum Einsatz kommen.

Neben dem genannten Herzschnitt aus Kohlenwasserstoffen mit (überwiegend) sechs bis acht Kohlenstoffatomen können grundsätzlich auch andere Fraktionen gewonnen werden, wie nachfolgend erläutert. Beispielsweise kann in diesem Zusammenhang, wenn Ausgangsfraktionen mit entsprechenden Komponenten vorliegen, eine leichtere Fraktion mit (überwiegend) sechs und ggf. weniger Kohlenstoffatomen und eine schwerere Fraktion mit (überwiegend) sieben und mehr Kohlenstoffatomen (als C6/C7-Trennung bezeichnet), eine leichtere Fraktion mit (überwiegend) sieben und weniger Kohlenstoffatomen und eine schwerere Fraktion mit (überwiegend) acht und mehr Kohlenstoffatomen (C7/C8-Trennung) oder eine leichtere Fraktion mit (überwiegend) acht und weniger Kohlenstoffatomen und eine schwerere Fraktion mit (überwiegend) neun und mehr Kohlenstoffatomen (C8/C9-Trennung) gewonnen werden. Die jeweils leichtere Fraktion wird der Entschwefelung und anschließend der Gewinnung der aromatischen Verbindungen unterworfen. Die Untergrenze der Kohlenstoffanzahl der in den leichteren Fraktionen enthaltenen Kohlenwasserstoffe liegt dabei typischerweise bei fünf oder sechs.

Nachteilig bei den bekannten Verfahren ist, dass in der Entschwefelung als Nebenprodukte schwerere Kohlenwasserstoffe mit höheren Kohlenstoffanzahlen gebildet werden, als sie in der der Entschwefelung unterworfenen Fraktion zuvor enthalten sind. Dies betrifft sowohl den klassischen Herzschnitt als auch die anderen soeben erläuterten "leichteren" Fraktionen. Diese schwereren Kohlenwasserstoffe können in den extraktiven Verfahren zur Gewinnung der aromatischen Verbindungen stören, weil sie sich im verwendeten Extraktionsmittel anreichern und zu sogenanntem Fouling und zu Extraktionsmittelverlusten führen.

Aufgabe der vorliegenden Erfindung ist es daher, verbesserte Möglichkeiten zur trenntechnischen Bearbeitung von entsprechenden Stoffgemischen bereitzustellen.

### Offenbarung der Erfindung

Diese Aufgabe wird durch ein Verfahren und eine Anlage zur trenntechnischen Bearbeitung eines Kohlenwasserstoffe enthaltenden Stoffgemischs mit den Merkmalen der unabhängigen Patentansprüche gelöst. Ausgestaltungen sind Gegenstand der abhängigen Patentansprüche und der nachfolgenden Beschreibung.

Vor der Erläuterung der Merkmale und Vorteile der vorliegenden Erfindung werden deren Grundlagen und die verwendeten Begriffe erläutert.

Flüssige und gasförmige Ströme, Einsätze, Produkte und dergleichen (nachfolgend kurz "Stoffgemische") können im hier verwendeten Sprachgebrauch reich oder arm an einer oder mehreren Komponenten sein, wobei "reich" für einen Gehalt von wenigstens 75%, 90%, 95%, 99%, 99,5%, 99,9% oder 99,99% und "arm" für einen Gehalt von höchstens 25%, 10%, 5%, 1 %, 0,1% oder 0,01% auf molarer, Gewichts- oder Volumenbasis stehen kann. Der Begriff "überwiegend" kann insbesondere der Definition von "reich" entsprechen. Stoffgemische können im hier verwendeten Sprachgebrauch ferner angereichert oder abgereichert an einer oder mehreren Komponenten sein, wobei sich diese Begriffe auf einen entsprechenden Gehalt in einem Ausgangsstoffgemisch beziehen, aus dem das jeweilige Stoffgemisch gebildet wurde. Nach einer "Anreicherung" liegt zumindest der 1,1-fache, 1,5-fache, 2-fache, 5-fache, 10-fache, 100-fache oder 1.000-fache Gehalt einer entsprechenden Komponente vor, nach einer "Abreicherung" höchstens der 0,9-fache, 0,5-fache, 0,1-fache, 0,01-fache oder 0,001-fache Gehalt, bezogen auf den Gehalt in dem jeweiligen Ausgangsstoffgemisch, vor.

Ein entsprechendes Stoffgemisch ist von einem anderen Stoffgemisch "abgeleitet" oder "gebildet", wenn es zumindest einige in dem anderen Stoffgemisch enthaltene oder aus diesem erhaltene Komponenten aufweist. Ein in diesem Sinne abgeleitetes Stoffgemisch kann aus dem anderen Stoffgemisch beispielsweise durch Abtrennen oder Abzweigen eines Teils oder einer oder mehrerer Komponenten, Anreichern oder Abreichern bezüglich einer oder mehrerer Komponenten, chemisches oder physikalisches Umsetzen einer oder mehrerer Komponenten, Erwärmen, Abkühlen, Druckbeaufschlagen und dergleichen erhalten werden.

Ist hier angegeben, dass ein Stoffgemisch "unter Verwendung von Fluid" eines anderen Stoffgemischs gebildet wird, kann hierunter fallen, dass das gesamte andere Stoffgemisch zur Bildung des Stoffgemisch verwendet wird, das Stoffgemisch kann aber auch unter Verwendung nur eines Teils des anderen Stoffgemisch oder unter Verwendung weiterer Komponenten oder Stoffgemische gebildet sein. Beispielsweise kann ein "unter Verwendung von Fluid" eines ersten Stoffgemischs gebildetes zweites Stoffgemisch auch einen Teil eines dritten Stoffgemischs aufweisen und braucht nicht das gesamte erste Stoffgemisch zu enthalten.

In den genannten Verfahren können insbesondere Destillationssäulen zum Einsatz kommen. Zur Auslegung und Ausgestaltung entsprechender Vorrichtungen sei auf einschlägige Lehrbücher verwiesen (siehe beispielsweise K. Sattler: Thermische Trennverfahren. Grundlagen, Auslegung, Apparate. Weinheim: Wiley-VCH, 3. Auflage 2001). Destillationssäulen und Absorptionskolonnen werden nachfolgend auch unter dem Begriff "Trennsäulen" zusammengefasst. Einer Trennsäule ist typischerweise immer zumindest eine flüssige Fraktion ("Sumpfprodukt") und eine gasförmige Fraktion ("Kopfprodukt") in einem oberen ("Kopf") bzw. unteren Bereich ("Sumpf") entnehmbar.

Bei einer "Destillationssäule" handelt es sich im hier verwendeten Sprachgebrauch um eine Trennsäule, die dafür eingerichtet ist, ein gasförmig oder flüssig oder in Form eines Zweiphasengemischs mit flüssigen und gasförmigen Anteilen, ggf. auch im überkritischen Zustand, bereitgestelltes Stoffgemisch (Fluid) zumindest teilweise aufzutrennen, also aus dem Stoffgemisch jeweils Reinstoffe oder Stoffgemische zu erzeugen, die gegenüber dem Stoffgemisch bezüglich zumindest einer Komponente angereichert bzw. abgereichert oder reich bzw. arm im oben erläuterten Sinne sind. Typischerweise sind Destillationssäulen als zylindrische Metallbehälter ausgebildet, die mit Einbauten, beispielsweise Siebböden oder geordneten oder ungeordneten Packungen, ausgerüstet sind. Eine unter Verwendung des eingespeisten Stoffgemischs in einem oberen Bereich der Destillationssäule gebildetes gasförmiges Fluid wird auch als "Kopfprodukt", ein unter Verwendung des eingespeisten Stoffgemischs in einem unteren Bereich der Destillationssäule gebildetes flüssiges Fluid auch als "Sumpfprodukt" bezeichnet. Eine Destillationssäule zeichnet sich unter anderem dadurch aus, dass kontinuierlich ein Teil des Sumpfprodukts mittels eines sogenannten Sumpfverdampfers erwärmt wird, hierdurch verdampft, und in der Destillationssäule gasförmig aufsteigt. Eine Destillationssäule ist ferner typischerweise mit einem sogenannten Kopfkondensator versehen, in den zumindest ein Teil des Kopfprodukts zu einem Kondensat verflüssigt und als flüssiger Rücklauf am Kopf der Destillationssäule aufgegeben wird. Ein Teil des Kopfprodukts und des Sumpfprodukts kann jeweils auch anderweitig, beispielsweise als Produkt, verwendet werden.

Eine Destillationssäule ist im hier verwendeten Sprachgebrauch "zweiteilig" ausgebildet, wenn sie (zumindest) zwei baulich getrennte Bereiche bzw. Säulenteile, nämlich einen "ersten" und einen "zweiten" Säulenteil aufweist. Ein Stoffgemisch wird dabei in den ersten Säulenteil eingespeist und dort in definierter Weise trenntechnisch bearbeitet. Ein Kopfprodukt des ersten Säulenteils wird zumindest teilweise in den zweiten Säulenteil überführt und dort trenntechnisch bearbeitet. Auf den ersten Säulenteil wird eine in dem zweiten Säulenteil gebildete Flüssigkeit aufgegeben. Die erwähnte "bauliche Trennung" umfasst dabei zumindest Mittel, die verhindern, dass eine Flüssigkeit aus dem zweiten in den ersten Säulenteil ablaufen kann, beispielsweise einen Flüssigkeitssperrboden. Flüssigkeit aus dem zweiten Säulenteil wird daher in einer zweiteiligen Destillationssäule mittels Leitungen aus dem zweiten Säulenteil ausgeleitet und danach kontrolliert, beispielsweise unter Verwendung geeigneter Steuer- und/oder Regeleinrichtungen, in den ersten Säulenteil eingespeist. Wird ein Flüssigkeitssperrboden verwendet, kann dennoch Gas aus dem ersten Säulenteil in den zweiten Säulenteil aufsteigen. Eine bauliche Trennung kann jedoch auch Mittel umfassen, wie insbesondere im Rahmen der vorliegenden Erfindung der Fall, die ein Aufsteigen von Gas aus dem ersten Säulenteil in den zweiten Säulenteil verhindern. In diesem Fall wird das Gas mittels Leitungen aus dem ersten Säulenteil ausgeleitet und danach kontrolliert, beispielsweise ebenfalls unter Verwendung geeigneter Steuer- und/oder Regeleinrichtungen, in den zweiten Säulenteil überführt. Zumindest der erste Säulenteil verfügt über einen Sumpfverdampfer und der zweite Säulenteil über einen Kopfkondensator. Da auf den ersten Säulenteil jedoch, wie erwähnt, eine in dem zweiten Säulenteil gebildete Flüssigkeit aufgegeben wird, ist für den ersten Säulenteil zumindest kein Kopfkondensator erforderlich. Eine zweiteilige Säule kann eine bauliche Einheit darstellen, d.h. der erste und der zweite Säulenteil können in einer gemeinsamen Außenhülle angeordnet sein. Dies schafft Vorteile beispielsweise bei der Isolierung. Typischerweise ist der zweite Teil vollständig oberhalb des ersten Säulenteils angeordnet, d.h. der tiefste Punkt, an dem sich Flüssigkeit in dem zweiten Säulenteil sammelt, liegt geodätisch oberhalb des höchsten Punkts, an dem sich Gas in dem ersten Säulenteil sammelt. Zumindest liegt jedoch der Punkt, an dem in den ersten Säulenteil zu überführende Flüssigkeit in dem zweiten Säulenteil anfällt, geodätisch oberhalb des Punkts, an dem die Flüssigkeit in den ersten Säulenteil eingespeist wird. Auf diese Weise kann Flüssigkeit aus dem zweiten Säulenteil ohne Hilfe von Pumpen und ausschließlich durch Schwerkraftwirkung in den ersten Säulenteil überführt werden.

### Vorteile der Erfindung

Vor dem eingangs erläuterten Hintergrund schlägt die vorliegende Erfindung ein Verfahren zur Bearbeitung eines Stoffgemischs vor, das überwiegend oder ausschließlich Kohlenwasserstoffe mit M bis N Kohlenstoffatomen enthält. Die Kohlenwasserstoffe umfassen schwefelhaltige Kohlenwasserstoffe, die aus dem Stoffgemisch entfernt bzw. durch ein Entschwefelungsverfahren umgesetzt werden sollen. Ein entsprechendes Stoffgemisch kann insbesondere auch vorab einer ersten Stufe einer bekannten Pyrolysebenzinhydrierung unterworfen werden und daher auch beispielsweise gelösten Restwasserstoff in Spuren enthalten. Das erfindungsgemäße Verfahren umfasst, wie insoweit bekannt, unter Verwendung von Fluid des genannten Stoffgemischs einen ersten Einsatz zu bilden und diesen einer ersten Trennung zu unterwerfen. In dieser ersten Trennung wird eine erste Fraktion gebildet, die überwiegend oder ausschließlich Kohlenwasserstoffe mit X bis Y Kohlenstoffatomen und zumindest einen Teil der in dem ersten Einsatz enthaltenen schwefelhaltigen Kohlenwasserstoffe enthält.

Eine entsprechende Trennung wurde eingangs unter Bezugnahme auf die aus entsprechenden Stoffgemischen gebildeten "leichteren" und "schwereren" Fraktionen erläutert. Die "erste" Fraktion stellt eine derartige "leichtere" Fraktion dar, die, wie ebenfalls erläutert, in herkömmlichen Entschwefelungsverfahren mit zusätzlichen schwereren Kohlenwasserstoffverbindungen als Nebenprodukten verunreinigt wird. Nach einem Entschwefelungsverfahren enthält die "erste" bzw. "leichtere" Fraktion also schwerere Kohlenwasserstoffe mit einer größeren Anzahl an Kohlenstoffatomen als sie zuvor in der entsprechenden Fraktion enthalten waren.

Mit anderen Worten wird unter Verwendung von Fluid der ersten Fraktion im Rahmen der vorliegenden Erfindung ein zweiter Einsatz gebildet und einer Entschwefelung unterworfen. In der Entschwefelung werden die in dem zweiten Einsatz enthaltenen schwefelhaltigen Kohlenwasserstoffe überwiegend oder vollständig umgesetzt und es werden Kohlenwasserstoffe mit mehr als Y Kohlenstoffatomen als Nebenprodukte gebildet, so dass ein Produktgemisch der Entschwefelung überwiegend oder ausschließlich Kohlenwasserstoffe mit X bis Y Kohlenstoffatomen und die (schwereren) Nebenprodukte enthält. Die Kohlenwasserstoffe mit X bis Y Kohlenstoffatomen können dabei die bereits zuvor in der zweiten Fraktion enthaltenden Kohlenwasserstoffe sein, es kann sich jedoch um Hydrierungsprodukte entsprechender Kohlenwasserstoffe handeln, wie eingangs erläutert. Beispielsweise können im Rahmen einer derartigen Entschwefelung, die zugleich eine (Voll-)Hydrierung darstellt, eine Umsetzung von Olefinen zu Paraffinen und Naphthenen umfassen, wobei sich die Kohlenstoffanzahl entsprechender Verbindungen aber nicht ändert.

Die vorliegende Erfindung eignet sich für eine Reihe unterschiedlicher Bearbeitungsverfahren und kann insbesondere auch die zuvor erläuterte Bildung eines klassischen "Herzschnitts" aus einem entsprechenden Stoffgemisch umfassen. Aus dem Stoffgemisch wurden, falls vorhanden, Kohlenwasserstoffe mit vier und weniger oder fünf und weniger Kohlenstoffatomen (beispielsweise in einem Debutanizer oder Depentanizer oder einer entsprechenden Einrichtung) abgetrennt. So kann im Rahmen der vorliegenden Erfindung M fünf oder sechs sein, X fünf oder sechs sein, wenn M fünf ist, oder sechs sein, wenn M sechs ist, Y eine ganze Zahl von sechs, sieben oder acht sein und N eine ganze Zahl größer als Y sein. Wie sich aus den Definitionen für X und Y ergibt, kann sowohl der Wert für X als auch der Wert für Y bei sechs liegen. Ist daher zuvor und nachfolgend von Kohlenwasserstoffen "mit X bis Y Kohlenstoffatomen" die Rede, handelt es sich in diesem Spezialfall ausschließlich um Kohlenwasserstoffe mit sechs Kohlenstoffatomen. Wie erwähnt, eignet sich die vorliegende Erfindung insbesondere zur Bearbeitung von Pyrolysebenzin oder hieraus gebildeter Fraktionen, in denen die schwersten enthaltenen Kohlenwasserstoffe zunächst zehn, aber auch elf oder 12 Kohlenstoffatome aufweisen können. Wird eine entsprechende Fraktion beispielsweise einer ersten Stufe einer bekannten Pyrolysebenzinhydrierung unterworfen, können sich auch hier Nebenprodukte bilden. Sowohl die in der ersten Stufe der Pyrolysebenzinhydrierung als auch die bei der Entschwefelung der oben erläuterten ersten Fraktion als Nebenprodukte gebildeten schwereren Kohlenwasserstoffe sind typischerweise Di- oder Oligomere entsprechender Kohlenwasserstoffe und weisen daher im vorliegenden Fall eine Kohlenstoffanzahl von mindestens zehn oder zwölf auf. In dem dem ersten Einsatz unterworfenen Stoffgemisch kann daher N auch deutlich über zehn, elf oder 12 liegen.

Das erfindungsgemäße Verfahren zeichnet sich nun dadurch aus, dass unter Verwendung von Fluid des Produktgemischs ein dritter Einsatz gebildet und einer zweiten Trennung in einer zweiteiligen Destillationssäule unterworfen wird, in der eine zweite und eine dritte Fraktion gebildet werden. Die zweite Fraktion enthält dabei zumindest den überwiegenden Teil der in dem dritten Einsatz enthaltenen Nebenprodukte. Fluid der zweiten Fraktion kann vorteilhafterweise bei der Bildung des ersten Einsatzes verwendet, also in das Verfahren stromauf der Trennung zur Bildung der ersten Fraktion zurückgeführt werden. Auch eine vollständige Ausschleusung der zweiten Fraktion aus dem Verfahren ist jedoch grundsätzlich möglich. Auf diese Weise können Kohlenwasserstoffe mit mehr als Y Kohlenstoffatomen, also die Nebenprodukte, nachfolgende Schritte, insbesondere eine Aromatenextraktion, nicht mehr stören.

Insbesondere ermöglicht es die vorliegende Erfindung, eine Fraktion als die dritte Fraktion bereitzustellen, die zumindest die Kohlenwasserstoffe mit sechs, und, bei entsprechenden Werten für Y, zudem die Kohlenwasserstoffe mit sieben oder sieben und acht Kohlenstoffatomen enthält, die entsprechende Aromaten umfassen, wobei diese Fraktion jedoch arm oder frei von höheren Kohlenwasserstoffen ist. Die dritte Fraktion ist aufgrund der zweiten Trennung insbesondere arm an oder frei von den Nebenprodukten mit mehr als Y Kohlenstoffatomen.

Eine einfache partielle Verdampfung in einem Wärmetauscher würde aufgrund des Siedeverhaltens der Nebenprodukte nicht die erforderlichen Reinheitsanforderungen erfüllen. Durch die Verwendung einer zweiteiligen Destillationssäule, wie nachfolgend erläutert, vereinfachen sich die Erstellung und der Betrieb einer entsprechenden Anlage im Rahmen der vorliegenden Erfindung deutlich. Eine alternativ grundsätzlich ebenfalls mögliche Anordnung mit zwei Destillationssäulen würde für jede dieser Destillationssäulen einen eigenen Sumpfverdampfer und ein entsprechendes Kondensatorsystem erfordern. Durch den Einsatz einer zweiteiligen Destillationssäule kann hingegen eine Kondensationsanordnung für einen der Säulenteile eingespart werden.

Fluid der zweiten Fraktion kann, wie erwähnt, bei der Bildung des ersten Einsatzes verwendet oder aus der Anlage ausgeschleust werden. Fluid der dritten Fraktion wird hingegen in der zweiteiligen Destillationssäule in einer dritten Trennung weiter aufgetrennt. Die dritte Fraktion enthält einen Teil der in dem dritten Einsatz enthaltenen Kohlenwasserstoffe mit Y und ggf. weniger Kohlenstoffatomen, ein Teil entsprechender Kohlenwasserstoffe ist in die zweite Fraktion übergegangen. Da diese dritte Fraktion frei oder weitgehend frei von den genannten schwereren Nebenprodukten ist, lässt sie sich besonders einfach im Hinblick auf eine Aromatenextraktion in der dritten Trennung trennen, d.h. leichtere Verbindungen können abgetrennt werden, ohne dass eine entsprechende Fraktion, die bei der Abtrennung der leichteren Komponenten zurückbleibt, nennenswerte Anteile der Nebenprodukte enthält.

Vorteilhafterweise wird dabei unter Verwendung des Fluids der dritten Fraktion ein vierter Einsatz gebildet, der der erwähnten dritten Trennung unterworfen wird. In der dritten Trennung werden dabei vorteilhafterweise eine vierte und eine fünfte Fraktion gebildet, wobei die vierte Fraktion zumindest den überwiegenden Anteil der in dem vierten Einsatz enthaltenen Kohlenwasserstoffe mit sechs bis Y Kohlenstoffatomen enthält. Die vierte Fraktion wird anschließend beispielsweise einer weiteren Trennung oder einer Aromatenextraktion zugeführt, ohne dass hier die erwähnten Nebenprodukte stören würden. Die fünfte Fraktion ist hingegen vorzugsweise arm oder frei von Kohlenwasserstoffen mit sechs Kohlenstoffatomen und kann beispielsweise leichtere Kohlenwasserstoffe mit fünf Kohlenstoffatomen, Spuren gelösten Wasserstoff (aus der Entschwefelung), Schwfelwasserstoff und andere leichte Bestandteile enthalten. Weil die entsprechende Fraktion zuvor die erwähnten Schritte durchlaufen hat, ist sie arm an oder frei von aromatischen Verbindungen mit sechs Kohlenstoffatomen, insbesondere von Benzol, wobei jedoch Spuren vorhanden sein können. Ferner hat eine entsprechende fünfte Fraktion bereits eine Entschwefelung durchlaufen und ist daher bereits arm an oder frei von schwefelhaltigen Kohlenwasserstoffen. Die fünfte Fraktion kann in das Verfahren zurückgeführt werden, beispielsweise in einen Dampfspaltschritt.

Mit anderen Worten ist es im Rahmen der vorliegenden Erfindung von besonderem Vorteil, wenn die in dem Stoffgemisch enthaltenen Kohlenwasserstoffe mit M bis N Kohlenstoffatomen aromatische Verbindungen mit sechs, sechs und sieben oder sechs bis acht Kohlenstoffatomen umfassen, die zumindest zum Teil auch in dem vierten Einsatzgemisch enthalten sind, wobei die vierte Fraktion zumindest den überwiegenden Anteil dieser in dem dritten Einsatzgemisch enthaltenen aromatischen Verbindungen enthält. Diese können durch die erläuterten Schritte besonders einfach zurückgewonnen werden.

Im Rahmen der vorliegenden Erfindung betragen M und X vorteilhafterweise fünf und Y beträgt, wie erwähnt, sechs, sieben oder acht. Mit anderen Worten enthält damit die erste Fraktion Kohlenwasserstoffe mit fünf und sechs, fünf bis sieben oder fünf bis acht Kohlenstoffatomen. Ferner wird bei der ersten Trennung, der das erste Einsatzgemisch unterworfen wird, eine weitere Fraktion gebildet, die überwiegend oder ausschließlich Kohlenwasserstoffe mit Y bis N Kohlenstoffatomen enthält. Die erste Trennung kann im Rahmen der vorliegenden Erfindung also eine sogenannte C6/C7-Trennung, eine C7/C8-Trennung oder eine C8/C9-Trennung sein. Die vorliegende Erfindung eignet sich für alle derartigen Verfahren in gleicher Weise. Um eine vollständige Trennung von Verbindungen mit mehr als Y Kohlenstoffatomen von Verbindungen mit weniger als Y Kohlenstoffatomen bewirken zu können, ist es erforderlich, die Trennbedingungen so einzustellen, dass Kohlenwasserstoffatome mit Y Kohlenstoffatomen in der ersten Trennung sowohl in die erste als auch in die weitere Fraktion übergehen.

Wie erwähnt, eignet sich das erfindungsgemäße Verfahren insbesondere zur Bearbeitung von Pyrolysebenzin, wobei N neun, zehn, elf oder 12 ist, oder, wenn entsprechende Di- und Oligomere enthalten sind, auch deutlich darüber liegt, und das Stoffgemisch als Pyrolysebenzinfraktion aus einem Abstrom eines Dampfspaltverfahrens gewonnen wird. Die vorliegende Erfindung erlaubt hier eine besonders effiziente Entschwefelung und Extraktion von aromatischen Verbindungen.

Wie erläutert, wird im Rahmen der vorliegenden Erfindung eine zweiteilige Destillationssäule eingesetzt. Diese umfasst vorteilhafterweise einen ersten Säulenteil und einen oberhalb des ersten Säulenteils angeordneten zweiten Säulenteil. Beide Säulenteile können beispielsweise in einer gemeinsamen Außenhülle angeordnet sein, wie oben erläutert. Die zweite Trennung erfolgt vorteilhafterweise in dem ersten Säulenteil und die dritte Trennung in dem zweiten Säulenteil, was insbesondere die nachfolgend erläuterten Vorteile bietet.

Vorteilhafterweise wird die zweite Fraktion im Rahmen der vorliegenden Erfindung aus einem Sumpfprodukt des ersten Säulenteils gebildet. Die dritte Fraktion wird hingegen aus einem Kopfprodukt des ersten Säulenteils gebildet. Ferner wird vorteilhafterweise die vierte Fraktion aus einem Sumpfprodukt des zweiten Säulenteils gebildet und die fünfte Fraktion aus einem Kopfprodukt des zweiten Säulenteils. Besonders vorteilhaft ist dabei, wenn ein nicht als die zweite Fraktion verwendeter Anteil des Sumpfprodukts des ersten Säulenteils und ein nicht als die vierte Fraktion verwendeter Anteil des Sumpfprodukts des zweiten Säulenteils jeweils verdampft und in die entsprechende Säule zurückgeführt wird. Hingegen wird vorteilhafterweise ein nicht als die fünfte Fraktion verwendeter Anteil des Kopfprodukts des zweiten Säulenteils verflüssigt und auf den zweiten Säulenteil als Rücklauf aufgegeben. Vorteilhafterweise wird das dritte Einsatzgemisch zumindest teilweise flüssig, d.h. ggf. auch teilverdampft, in den ersten Säulenteil eingespeist und das vierte Einsatzgemisch gasförmig in den zweiten Säulenteil eingespeist.

Es ist besonders vorteilhaft, wenn aus einem mittleren Bereich des zweiten Säulenteils Fluid entnommen und auf den ersten Säulenteil als flüssiger Rücklauf aufgegeben wird. Auf diese Weise spart man sich ein Kondensatorsystem für den ersten Säulenteil, dieser kann unter Verwendung des erläuterten Fluidstroms als Rücklauf betrieben werden.

Eine Anlage zur Bearbeitung eines Stoffgemischs, das überwiegend oder ausschließlich Kohlenwasserstoffe mit M bis N Kohlenstoffatomen und Schwefelverbindungen enthält, ist ebenfalls Gegenstand der vorliegenden Erfindung. Diese weist sämtliche Mittel auf, die sie zur Durchführung eines zuvor erläuterten Verfahrens befähigen. Zu Details sei auf den entsprechenden unabhängigen Patentanspruch verwiesen. Eine entsprechende Anlage profitiert von den zuvor erläuterten Vorteilen, auf die daher ausdrücklich verwiesen wird.

Bevorzugte Ausführungsformen der Erfindung werden nachfolgend unter Bezugnahme auf die beigefügten Figuren gegenüber dem Stand der Technik näher erläutert.

### Kurze Beschreibung der Zeichnung

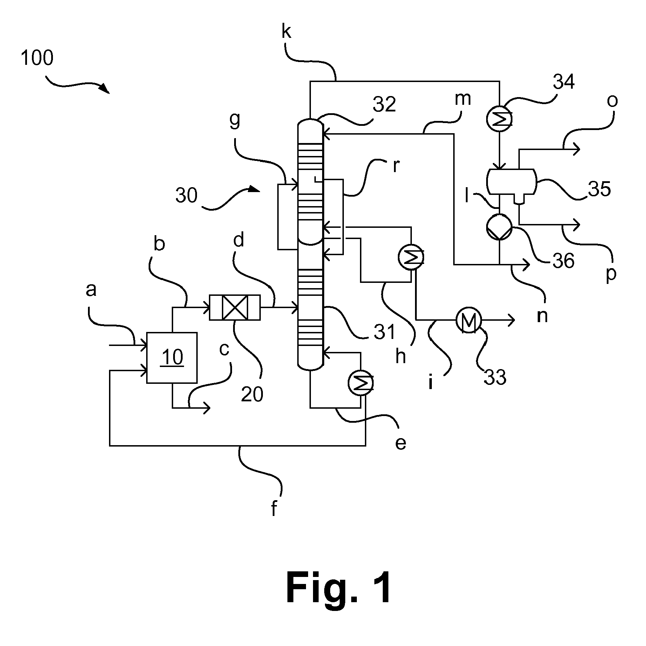

Figur 1 veranschaulicht ein Verfahren gemäß einer Ausführungsform der Erfindung in Form eines schematischen Prozessflussdiagramms.

### Ausführliche Beschreibung der Zeichnung

In Figur 1 ist ein Verfahren gemäß einer Ausführungsform der Erfindung in Form eines schematischen Prozessflussdiagramms veranschaulicht und insgesamt mit 100 bezeichnet. Das Verfahren wird nachfolgend unter Bezugnahme auf ein Stoffgemisch beschrieben, das fünf bis zwölf Kohlenstoffatome enthält, die schwefelhaltige Kohlenwasserstoffe umfassen; das Verfahren eignet sich jedoch, wie mehrfach erläutert, auch für andere Stoffgemische.

Fluid eines entsprechenden Stoffgemischs wird im dargestellten Beispiel als Strom a einer Trennung 10 zugeführt und bildet dort einen Teil eines Einsatzes (vorstehend und im Folgenden als "erster" Einsatz bezeichnet). Der erste Einsatz wird ferner unter Verwendung von Fluid eines weiteren Stoffgemischs, hier mit Strom f veranschaulicht, gebildet, wie unten erläutert. Wie mehrfach erläutert ist es jedoch nicht erfindungswesentlich, dass der erste Einsatz unter Verwendung eines entsprechenden, rückgeführten Stroms f gebildet wird. Der Strom f kann aus dem Verfahren ausgeschleust oder an anderer Stelle zurückgeführt werden.

In der Trennung 10, die in der vorliegenden Anmeldung als "erste" Trennung bezeichnet wird, werden zwei Fraktionen gebildet und im dargestellten Beispiel in Form der Ströme b und c bereitgestellt. Die dem Strom b entsprechende Fraktion wird hier als "erste" Fraktion bezeichnet. Die erste Fraktion, und damit der Strom b, kann beispielsweise überwiegend oder ausschließlich Kohlenwasserstoffe mit fünf und sechs Kohlenstoffatomen enthalten. Weil das in Form des Stroms a zugeführte Fluid des ursprünglichen Stoffgemischs schwefelhaltige Kohlenwasserstoffe enthält, sind diese oder ein Teil dieser schwefelhaltigen Kohlenwasserstoffe auch in dem Fluid des Stroms b enthalten. Ferner wird in der ersten Trennung 10 eine weitere Fraktion in Form des erwähnten Stroms c gebildet, die im dargestellten Beispiel überwiegend oder ausschließlich Kohlenwasserstoffe mit sieben bis zwölf Kohlenstoffatomen enthalten kann. Je nach Trennschärfe gehen die Kohlenwasserstoffe mit der jeweiligen Grenzkohlenstoffzahl, d.h. hier sechs oder sieben, auch in beide Fraktionen, d.h. die erste und die weitere Fraktion über.

Unter Verwendung von Fluid der ersten Fraktion, also des Stroms b, wird ein Einsatz gebildet, der im Rahmen dieser Anmeldung als "zweiter" Einsatz bezeichnet wird. Der zweite Einsatz wird einer Entschwefelung 20 zugeführt, die wie zuvor erläutert arbeitet. Dies bedeutet, dass in der Entschwefelung 20 die im dem zweiten Einsatz enthaltenen schwefelhaltigen Kohlenwasserstoffe, also die schwefelhaltigen Kohlenwasserstoffe in dem Strom b, überwiegend oder vollständig umgesetzt werden. Ferner werden bei der Entschwefelung 20 Nebenprodukte in Form schwererer Kohlenwasserstoffe, wie erläutert beispielsweise in Form von Di- und/oder Oligomeren, gebildet. Ein bei der Entschwefelung 20 gebildetes Produktgemisch wird in Form des Stroms d als "dritter" Einsatz flüssig einer zweiteiligen Destillationssäule 30 zugeführt und hier zunächst in einem ersten Säulenteil 31 einer Trennung unterworfen, die hier als "zweite" Trennung bezeichnet wird. Bei der zweiten Trennung in dem ersten Säulenteil 31 wird ein Sumpfprodukt gebildet, das in Form des Stroms e aus dem ersten Säulenteil ausgeführt, in einem nicht gesonderten Sumpfverdampfer, beispielsweise mit Mitteldruckdampf, teilweise verdampft und teilweise in den ersten Säulenteil 31 gasförmig zurückgeführt werden kann. Ein nicht verdampfter Anteil des Stroms e wird im hier veranschaulichten speziellen Beispiel in Form des bereits erwähnten Stroms f in die erste Trennung 10 zurückgeführt. Der Strom f ist dabei aus einer Fraktion gebildet, die hier als "zweite" Fraktion bezeichnet wird und den überwiegenden Teil der in dem dritten Einsatz, also in dem Strom d, enthaltenen Nebenprodukte enthält.

Ein am Kopf des ersten Säulenteils 31 erhaltenes Gasgemisch ist daher frei oder weitgehend frei von entsprechenden Nebenprodukten. Vom Kopf des ersten Säulenteils 31, der die zweite Trennung durchführt, wird ein Strom g gasförmig abgezogen. Der Strom g bildet dabei eine Fraktion, die im Rahmen der vorliegenden Anmeldung als "dritte" Fraktion bezeichnet wird. Diese dritte Fraktion wird im dargestellten Beispiel teilweise oder vollständig in den zweiten Säulenteil 32 überführt und dort in einen mittleren Bereich als "vierter" Einsatz eingespeist.

Der zweite Säulenteil 32, der oberhalb des ersten Säulenteils 31 angeordnet ist, ist zur Durchführung einer weiteren Trennung eingerichtet, die im Rahmen der vorliegenden Anmeldung als "dritte" Trennung bezeichnet wird. Bei der dritten Trennung in dem zweiten Säulenteil 32 fällt ebenfalls ein flüssiges Sumpfprodukt an, das in Form des Stroms h abgezogen und ebenfalls teilweise in einem nicht gesondert bezeichneten Sumpfverdampfer verdampft werden kann. Der Sumpfverdampfer des zweiten Säulenteils 32 kann beispielsweise ebenfalls unter Verwendung von Mitteldruckdampf betrieben werden. Es wird ein Teil des Stroms h, der in dem Sumpfverdampfer verdampft wird, in den zweiten Säulenteil zurückgeführt und steigt dort als Dampf auf. Ein nicht in dem entsprechenden Sumpfverdampfer verdampfter Anteil wird in Form des Stroms i ausgeführt, gegebenenfalls in einem Wärmetauscher 33 gekühlt und als benzolreiche Fraktion bereitgestellt. Die in Form des Stroms i bereitgestellte Fraktion wird im Rahmen dieser Anmeldung als "vierte" Fraktion bezeichnet und enthält zumindest überwiegenden Anteil der in dem vierten Einsatz, d.h. in dem Strom g, enthaltenen Kohlenwasserstoffe mit sechs Kohlenstoffatomen.

Entsprechend ist ein Kopfprodukt des zweiten Säulenteils 32 frei oder überwiegend frei von Kohlenwasserstoffen mit sechs Kohlenstoffatomen und damit teilweise oder vollständig frei von aromatischen Verbindungen, insbesondere von Benzol. Ein Kopfprodukt des zweiten Säulenteils 32 wird in Form des Stroms k abgezogen, in einem Kühler 34 beispielsweise mit Kühlwasser teilkondensiert und anschließend beispielsweise in einen Abscheider 35 überführt. In dem Abscheider 35 wird ein Strom I gewonnen, der mittels einer Pumpe 36 zu einem Teil in Form des Stroms m zurück auf den zweiten Säulenteil 32 gepumpt werden kann und dort als Rücklauf dient. Ein verbleibender Strom n stellt eine weitere Fraktion dar, die im Rahmen der vorliegenden Anmeldung als "fünfte" Fraktion bezeichnet wird, und die arm oder frei von Kohlenwasserstoffen mit sechs Kohlenstoffatomen ist. Dem Abscheider 35 können ferner flüchtige Kohlenwasserstoffe mit vier und ggf. fünf Kohlenstoffatomen, Schwefelwasserstoff und ggf. Restwasserstoff in Form des Stroms o und ggf. eine wasserhaltige Ölfraktion in Form des Stroms p entnommen werden. Der Strom o kann beispielsweise in eine Rohgasverdichtung einer Olefinanlage geführt werden.

Besonders vorteilhaft ist es, wenn aus den zweiten Säulenteil in einem mittleren Bereich aus einer Flüssigkeitsrückhalteeinrichtung eine Flüssigkeit entnommen wird und in Form des Stroms r in den ersten Säulenteil überführt wird. Der Strom r bildet den Rücklauf auf den ersten Säulenteil und verhindert insbesondere, dass schwere Kohlenwasserstoffe wie die erläuterten Nebenprodukte aus dem ersten Säulenteil 31 in den zweiten Säulenteil 32 gelangen können.

## Patentansprüche

1. Verfahren (100) zur Bearbeitung eines Stoffgemischs, das überwiegend oder ausschließlich Kohlenwasserstoffe mit M bis N Kohlenstoffatomen enthält, die schwefelhaltige Kohlenwasserstoffe umfassen, wobei
- unter Verwendung von Fluid des Stoffgemischs ein erster Einsatz gebildet und einer ersten Trennung unterworfen wird, in der eine erste Fraktion gebildet wird, die überwiegend oder ausschließlich Kohlenwasserstoffe mit X bis Y Kohlenstoffatomen und zumindest einen Teil der in dem ersten Einsatz enthaltenen schwefelhaltigen Kohlenwasserstoffe enthält, und
- unter Verwendung von Fluid der ersten Fraktion ein zweiter Einsatz gebildet und einer Entschwefelung unterworfen wird, in der die in dem zweiten Einsatz enthaltenen schwefelhaltigen Kohlenwasserstoffe überwiegend oder vollständig umgesetzt und Kohlenwasserstoffe mit mehr als Y Kohlenstoffatomen als Nebenprodukte gebildet werden, so dass ein Produktgemisch der Entschwefelung überwiegend oder ausschließlich Kohlenwasserstoffe mit X bis Y Kohlenstoffatomen und die Nebenprodukte enthält, wobei
- M fünf oder sechs ist, X fünf oder sechs ist, wenn M fünf ist, oder sechs ist, wenn M sechs ist, Y sechs, sieben oder acht ist und N größer als Y ist,
**dadurch gekennzeichnet, dass**
- unter Verwendung von Fluid des Produktgemischs ein dritter Einsatz gebildet und einer zweiten Trennung in einer zweiteiligen Destillationssäule (30) unterworfen wird, in der eine zweite und eine dritte Fraktion gebildet werden, wobei die zweite Fraktion zumindest den überwiegenden Teil der in dem dritten Einsatz enthaltenen Nebenprodukte enthält, und wobei
- Fluid der dritten Fraktion in der zweiteiligen Destillationssäule in einer dritten Trennung weiter aufgetrennt wird.

2. Verfahren (100) nach Anspruch 1, bei dem Fluid der zweiten Fraktion bei der Bildung des ersten Einsatzes verwendet wird, indem es stromauf der ersten Trennung in das Verfahren (100) zurückgeführt wird.

3. Verfahren (100) nach Anspruch 1 oder 2, bei dem die dritte Fraktion zumindest einen Teil der in dem dritten Einsatz enthaltenen Kohlenwasserstoffe mit Y und weniger Kohlenstoffatomen enthält.

4. Verfahren (100) nach Anspruch 3, bei unter Verwendung des Fluids der dritten Fraktion ein vierter Einsatz gebildet und der dritten Trennung unterworfen wird, wobei in der dritten Trennung eine vierte und eine fünfte Fraktion gebildet werden, wobei die vierte Fraktion zumindest den überwiegenden Anteil der in dem vierten Einsatz enthaltenen Kohlenwasserstoffe mit sechs Kohlenstoffatomen enthält und die fünfte Fraktion arm an oder frei von Kohlenwasserstoffen mit sechs Kohlenstoffatomen ist.

5. Verfahren nach Anspruch 4, bei dem die in dem Stoffgemisch enthaltenen Kohlenwasserstoffe mit M bis N Kohlenstoffatomen aromatische Verbindungen mit sechs, sechs und sieben oder sechs bis acht Kohlenstoffatomen umfassen, die zumindest zum Teil auch in dem vierten Einsatzgemisch enthalten sind, wobei die vierte Fraktion zumindest den überwiegenden Anteil der in dem dritten Einsatzgemisch enthaltenen aromatischen Verbindungen enthält.

6. Verfahren nach einem der vorstehenden Ansprüche, bei dem M und X fünf oder sechs sind, und bei dem bei der ersten Trennung, der das erste Einsatzgemisch unterworfen wird, ferner eine weitere Fraktion gebildet wird, die überwiegend oder ausschließlich Kohlenwasserstoffe mit Y bis N Kohlenstoffatomen enthält.

7. Verfahren nach einem der vorstehenden Ansprüche, bei dem das Stoffgemisch eine Pyrolysebenzinfraktion ist, die aus einem Abstrom eines Dampfspaltverfahrens gewonnen wird.

8. Verfahren nach einem der vorstehenden Ansprüche, bei dem eine zweiteilige Destillationssäule (30) mit einem ersten Säulenteil (31) und einem oberhalb des ersten Säulenteils (31) angeordneten zweiten Säulenteil (32) verwendet wird, wobei die zweite Trennung in dem ersten Säulenteil (31) und die dritte Trennung in dem zweiten Säulenteil (32) durchgeführt wird.

9. Verfahren nach Anspruch 8, bei dem die zweite Fraktion aus einem Sumpfprodukt des ersten Säulenteils (31) gebildet wird und die dritte Fraktion aus einem Kopfprodukt des ersten Säulenteils (31) gebildet wird.

10. Verfahren nach Anspruch 9, bei dem die vierte Fraktion aus einem Sumpfprodukt des zweiten Säulenteils (32) gebildet wird und die fünfte Fraktion aus einem Kopfprodukt des zweiten Säulenteils (32) gebildet wird.

11. Verfahren nach Anspruch 10, bei dem ein nicht als die zweite Fraktion verwendeter Anteil des Sumpfprodukts des ersten Säulenteils (31) und ein nicht als die vierte Fraktion verwendeter Anteil des Sumpfprodukts des zweiten Säulenteils (32) verdampft und in die jeweilige Säule zurückgeführt wird.

12. Verfahren nach Anspruch 10 oder 11, bei dem ein nicht als die fünfte Fraktion verwendeter Anteil des Kopfprodukts des zweiten Säulenteils (32) verflüssigt und auf den zweiten Säulenteil als Rücklauf aufgegeben wird.

13. Verfahren nach einem der Ansprüche 8 bis 12, bei dem das dritte Einsatzgemisch zumindest teilweise flüssig in den ersten Säulenteil (31) eingespeist wird und das vierte Einsatzgemisch gasförmig in den zweiten Säulenteil (31) eingespeist wird.

14. Verfahren nach einem der Ansprüche 8 bis 13, bei dem aus einem mittleren Bereich des zweiten Säulenteils (32) Fluid entnommen und auf den ersten Säulenteil (31) als Rücklauf aufgegeben wird.

15. Anlage zur Bearbeitung eines Stoffgemischs, das überwiegend oder ausschließlich Kohlenwasserstoffe mit M bis N Kohlenstoffatomen enthält, die schwefelhaltige Kohlenwasserstoffe umfassen, wobei die Anlage Mittel aufweist, die dafür eingerichtet sind,
- unter Verwendung von Fluid des Stoffgemischs einen ersten Einsatz zu bilden und einer Trennung zu unterwerfen, in der eine erste Fraktion gebildet wird, die überwiegend oder ausschließlich Kohlenwasserstoffe mit X bis Y Kohlenstoffatomen und zumindest einen Teil der zuvor in dem Stoffgemisch enthaltenen schwefelhaltigen Kohlenwasserstoffe enthält, und
- unter Verwendung von Fluid der ersten Fraktion einen zweiten Einsatz zu bilden und einer Entschwefelung zu unterwerfen, in der die in dem zweiten Einsatz enthaltenen schwelfelhaltigen Kohlenwasserstoffe zumindest überwiegend umgesetzt werden und Kohlenwasserstoffe mit mehr als Y Kohlenstoffatomen als Nebenprodukte gebildet werden, so dass ein Produktgemisch der Entschwefelung überwiegend oder ausschließlich Kohlenwasserstoffe mit X bis Y Kohlenstoffatomen und die Nebenprodukte enthält, wobei
- M fünf oder sechs ist, X fünf oder sechs ist, wenn M fünf ist oder sechs ist, wenn M sechs ist, Y sechs, sieben oder acht ist und N größer als Y ist,
**gekennzeichnet durch** Mittel, die dafür eingerichtet sind,
- unter Verwendung von Fluid des Produktgemischs einen dritten Einsatz zu bilden und einer zweiten Trennung in einer zweiteiligen Destillationssäule (30) zu unterwerfen, in der eine zweite und eine dritte Fraktion gebildet werden, wobei die zweite Fraktion zumindest den überwiegenden Teil der in dem zweiten Trenneinsatz enthaltenen Nebenprodukte enthält, wobei
- Fluid der dritten Fraktion in der zweiteiligen Destillationssäule weiter aufgetrennt wird.
